# EUROPEAN PATENT APPLICATION

(11) **EP 4 760 360 A1**
(43) Date of publication of application: **17.06.2026**
(21) Application number: 24865193.7
(22) Date of filing: 23.08.2024
(51) Int. Cl.: G02B 1/14, B05D 1/40, B05D 3/00, B05D 5/00, B05D 7/00, G02B 1/113, G02C 7/00

(54) **LENS MANUFACTURING METHOD**

(30) Priority: 11.09.2023 JP 2023146943
(71) Applicant: Nikon-Essilor Co., Ltd., Tokyo 130-0026 (JP)
(72) Inventor: SHIODA Goro, Tokyo 130-0026 (JP)
(74) Representative: Hoffmann Eitle
(86) International application number: PCT/JP2024/029945
(87) International publication number: WO 2025/057689

(57) **Abstract**

Provided is a method for producing a lens capable of producing a lens in which a round-shaped defect and a vortex-shaped defect are hardly observed and which includes a hard coat layer having excellent coatability. The method for producing a lens comprises applying a hard coat layer-forming composition to a lens base by a spin coating method to form a hard coat layer, and in the spin coating method, a nozzle for discharging the hard coat layer-forming composition from a tip thereof discharges a predetermined amount of the hard coat layer-forming composition while the lens base is rotated, with the nozzle being linearly moved from a first position to a second position via a center of the lens base, the second position being situated opposite from the first position across the center of the lens base.

## Description

### TECHNICAL FIELD

The present disclosure relates to a method for producing a lens.

### BACKGROUND ART

Patent Literature 1 discloses a method for producing a heat mode type optical information-recording medium having, on a substrate, a recording layer capable of recording information by being irradiated with a laser beam, wherein in the step of applying a solution for forming the recording layer onto the substrate while rotating the substrate, when the solution is applied on an inner circumferential side of the substrate, a number of revolutions of the substrate is increased.

### CITATION LIST

### PATENT LITERATURE

Patent Literature 1: JP 2000-155994 A

### SUMMARY OF INVENTION

The present disclosure relates to a method for producing a lens, the method comprising applying a hard coat layer-forming composition to a lens base by a spin coating method to form a hard coat layer,
wherein in the spin coating method, when a nozzle for discharging the hard coat layer-forming composition from a tip thereof is linearly moved from a first position to a second position via a center of the lens base and discharges the hard coat layer-forming composition while the lens base is rotated, the second position being situated opposite from the first position across the center of the lens base,
a discharge amount of the hard coat layer-forming composition based on a projection area of the lens base projected from an optical axis direction of the lens base is not less than 0.0007 g/mm²,
the first position is situated between the center of the lens base and a position distanced from the center of the lens base by 15.0% of a radius of the lens base, and
the second position is situated between a position distanced from the center of the lens base by 15.0% of the radius of the lens base and a position distanced from the center of the lens base by 25.0% of the radius of the lens base.

### BRIEF DESCRIPTION OF DRAWINGS

[FIG. 1] FIG. 1 is a schematic cross-sectional view illustrating the method for producing a lens according to the present disclosure.
[FIG. 2] FIG. 2 is a diagram illustrating a positional relationship in the method for producing a lens according to the present disclosure.
[FIG. 3] FIG. 3 is a cross-sectional view of a lens in an embodiment obtained by the method for producing a lens according to the present disclosure.

### DESCRIPTION OF EMBODOIMENT

The present disclosure is described in detail below.

The method for producing a lens according to the present disclosure makes it possible to produce a lens in which a round-shaped defect and a vortex-shaped defect are hardly observed and which includes a hard coat layer having excellent coatability.

The following description of the constituent elements may be made on the basis of representative embodiments of the present disclosure, but the present disclosure is not limited to such embodiments.

In the present description, a numerical range expressed using "to" is a range including the numerical values stated before and after "to" as the lower and upper limit values of the range.

In the present description, when two or more kinds of a certain component are present, the "content" of the component means a total content of the two or more kinds.

In the present description, in a numerical range described in stages, an upper limit value or a lower limit value described in a certain numerical range may be replaced with an upper limit value or a lower limit value of another numerical range described in stages. In addition, in a numerical range described in the present description, an upper limit value or a lower limit value of a certain numerical range may be replaced with a value described in Examples.

In the present description, a combination of two or more preferred embodiments is a more preferred embodiment.

The "solid" of a composition in the present description means a component being a constituent of a layer formed using the composition, and when the composition contains a solvent (e.g., organic solvent, water, and the like), the "solid" means all the components except for the solvent. Even a liquid component is considered as a solid as long as it is a constituent component of the layer formed using the composition.

In the present description, the term "(meth)acryl" is a concept covering either or both of "acryl" and "methacryl", and the same applies to the terms "(meth)acrylate" and "(meth)acryloyl."

### <Method for producing lens>

The method for producing a lens according to the present disclosure is a method comprising applying a hard coat layer-forming composition to a lens base by a spin coating method to form a hard coat layer.

Application of a composition by a spin coating method is generally performed in such a manner that the lens base is placed on a spin coater provided with a pedestal capable of fixing and rotating a base, and the hard coat layer-forming composition is discharged from a nozzle to be supplied onto a surface of the base while the lens base is rotated. The hard coat layer-forming composition can be thus applied to an entire surface of the base by a centrifugal force.

Of the lens base, a surface (surface to be coated) on which the hard coat layer-forming composition is formed by a spin coating method may have any shape of a planar surface shape, a convex surface shape, and a concave surface shape, and often has a convex surface shape.

When the to-be-coated surface of the lens base has a convex surface shape or a concave surface shape, the radius of curvature thereof is preferably 50 to 2500 mm, and more preferably 100 to 1000 mm.

In the spin coating method, the rotational velocity of the lens base during the supply of the hard coat layer-forming composition is preferably 100 to 500 rotations per minute (rpm), more preferably 200 to 400 rpm, and even more preferably 250 to 350 rpm from the viewpoint of uniformity of the coating thickness.

The rotational velocity of the lens base during the supply of the hard coat layer-forming composition may be constant or vary according to a predetermined program, and is preferably constant.

Following the supply of the hard coat layer-forming composition, the rotational velocity of the base may be varied in order to spread the hard coat layer-forming composition over an entire surface of the lens base and to expel an excess of the hard coat layer-forming composition. The rotational velocity of the lens base following the supply of the hard coat layer-forming composition is not particularly limited and is preferably equal to or higher than the rotational velocity of the base during the supply of the hard coat layer-forming composition, and the upper limit is preferably not higher than 2000 rpm. The rotational velocity of the lens base following the supply of the hard coat layer-forming composition may be constant or vary, and the rotational velocity is preferably increased in increments.

The temperature of the lens base when the hard coat layer-forming composition is supplied is not particularly limited and, from the viewpoint of the coatability of the hard coat layer-forming composition, is preferably 10 to 50°C, and more preferably 15 to 40°C.

The discharge amount of the hard coat layer-forming composition from the nozzle based on the projected area of the lens base that is projected from the optical axis direction of the lens base is not less than 0.0007 g/mm², and, because the effect of the present disclosure is more excellent, is preferably not less than 0.00075 g/mm², and more preferably not less than 0.0008 g/mm². The upper limit of the discharge amount of the composition based on the projected area of the lens base that is projected from the optical axis direction of the lens base is preferably not more than 0.0009 g/mm² and more preferably not more than 0.00085 g/mm² from the viewpoint of the coating thickness.

The foregoing discharge amount (g) is a discharge amount (g) of the hard coat layer-forming composition from the start to completion of discharge. In the production method of the present disclosure, with the discharge amount of the hard coat layer-forming composition from the nozzle as described above, even when a hard coat layer-forming composition having a relatively high viscosity is used for example, a vortex shaped defect is presumably suppressed.

In the present disclosure, when discharging the hard coat layer-forming composition, the nozzle linearly moves from a first position to a second position via the center of the lens base, the second position being situated opposite from the first position across the center of the lens base. In this process, the moving velocity of the nozzle and the discharge rate from the nozzle are controlled such that the discharge starts at the first position and ends at the second position while the foregoing discharge amount is satisfied.

The discharge rate of the hard coat layer-forming composition from the nozzle may be appropriately selected depending on the discharge amount of the hard coat layer-forming composition and the moving distance of the nozzle and is preferably 1.0 to 3.0 g/s and more preferably 1.5 to 2.5 g/s.

The inner diameter of a tip of the nozzle for discharging the hard coat layer-forming composition is preferably φ 1.0 to 3.0 and more preferably φ 1.5 to 2.5.

The moving velocity of the nozzle can be appropriately adjusted and is preferably 2.0 to 8.0 mm/s, more preferably 3.0 to 6.0 mm/s, and even more preferably 4.0 to 5.0 mm/s.

The time of discharging the hard coat layer-forming composition can be appropriately adjusted and is preferably 1.0 to 3.0 s and more preferably 1.5 to 2.5 s.

The above-described discharge rate and moving velocity during the movement may be constant or vary and are preferably constant.

The first position is situated between a position distanced from the center of the lens base by 15.0% of the radius of the lens base and the center of the lens base. It should be noted that the first position may coincide with the center of the lens base or may be a position distanced from the center of the lens base by 15.0% of the radius of the lens base. For instance, when the lens base has a radius of 40 mm, the first position is situated at a position distanced from the center of the lens base by 0 to 6 mm.

The first position is preferably situated between a position distanced from the center of the lens base by 3.0% of the radius of the lens base and a position distanced from the center of the lens base by 7.0% of the radius of the lens base because the effect of the present disclosure is more excellent.

The second position is situated between a position distanced from the center of the lens base by 15.0% of the radius of the lens base and a position distanced from the center of the lens base by 25.0% of the radius of the lens base. It should be noted that the second position may be a position distanced from the center of the lens base by 15.0% of the radius of the lens base or a position distanced from the center of the lens base by 25.0% of the radius of the lens base. For instance, when the lens base has a radius of 40 mm, the second position is situated at a position distanced from the center of the lens base by 6 to 10 mm.

The second position is situated opposite from the first position across the center of the lens base. In other words, the first position, the center of the lens base, and the second position are aligned in this order along a line passing the center of the lens base.

The second position is situated preferably between a position distanced from the center of the lens base by 17.0% of the radius of the lens base and a position distanced from the center of the lens base by 23.0% of the radius of the lens base and more preferably between a position distanced from the center of the lens base by 18.0% of the radius of the lens base and a position distanced from the center of the lens base by 22.0% of the radius of the lens base, because the effect of the present disclosure is more excellent.

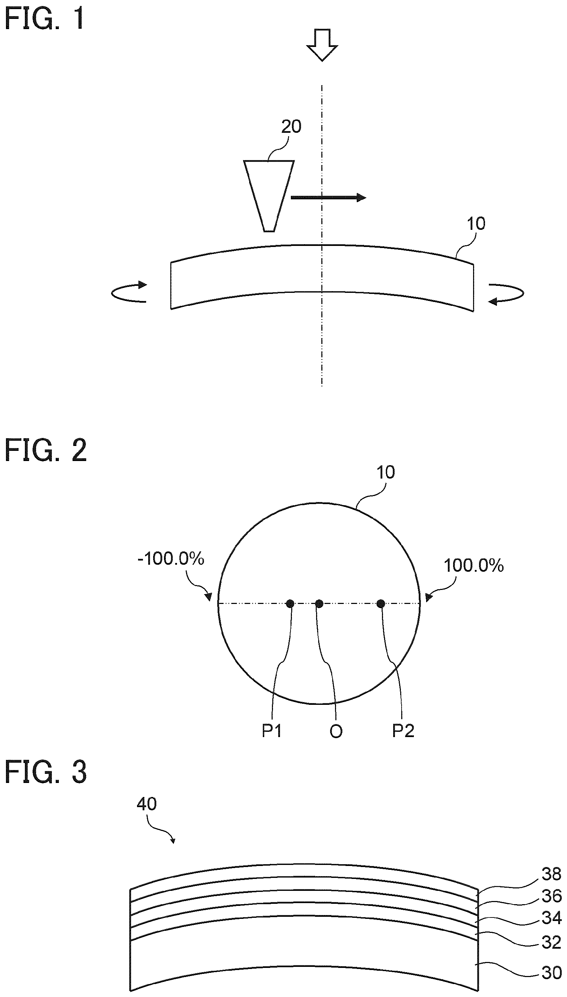

The method for producing a lens according to the present disclosure is described below in accordance with an embodiment illustrated in FIGS. 1 and 2. FIG. 1 illustrates a schematic cross-sectional view of a main part of the spin coating method in the embodiment of the present disclosure, and FIG. 2 is a diagram illustrating a positional relationship in the spin coating method in the embodiment of the present disclosure when viewed from a direction of a white arrow in FIG. 1.

As illustrated in FIG. 1, the discharge of the hard coat layer-forming composition from a nozzle 20 situated at the first position starts while a lens base 10 is rotated. In FIG. 1, a broken line shows the rotational axis of the lens base 10 and passes the center of the lens base 10. FIG. 1 illustrates an embodiment in which a surface, opposing the nozzle 20, of the lens base 10 has a convex surface shape while an opposite surface has a concave surface shape, but the shape of the lens base 10 is not limited thereto, and each surface may have any of a convex surface shape, a concave surface shape, and a flat plate shape.

In the method for producing a lens according to the present disclosure, while the lens base 10 is rotated, the nozzle 20 discharging the hard coat layer-forming composition is linearly moved from the first position to the second position via the center of the lens base 10 as indicated by a black arrow in FIG. 1. When reaching the second position, the nozzle 20 terminates the discharge of the hard coat layer-forming composition. At this time, the discharge rate of the hard coat layer-forming composition, the moving velocity of the nozzle 20, and other factors are controlled such that the discharge amount of the hard coat layer-forming composition by the nozzle 20 from the start of the discharge of the hard coat layer-forming composition at the first position until the nozzle 20 has moved to the second position and terminates the discharge of the hard coat layer-forming composition is not less than 0.0007 g/mm² based on a projected area of the lens base 10 that is projected from the optical axis direction of the lens base 10.

As shown in FIG. 2, a second position P2 is situated opposite from a first position P1 across a center O of the lens base 10. In other words, the first position P1, the center O of the lens base 10, and the second position P2 are aligned along a single line in this order. In FIG. 2, a broken line represents a line passing the center O of the lens base 10, and the first position P1 and the second position P2 are situated on the line as described above. The nozzle 20 linearly moves along the broken line.

On the line passing the center O of the lens base 10 in FIG. 2, with the center O of the lens base 10 being defined as a position of 0.0% distance from the center O of the lens base 10, an end of the lens base 10 is shown as a position of 100.0% distance from the center O of the lens base 10, and the other end of the lens base 10 is shown as a position of -100.0% distance from the center O of the lens base 10. The above absolute values in percentage are absolute values of percentages of distances from the center of the lens base 10 based on the radius of the lens base 10. For instance, a position at a distance of 10.0% of the radius of the lens base 10 from the center O of the lens base 10 along the line on the 100.0% position side with respect to the center O of the lens base 10 is a position of 10.0% from the center O of the lens base 10. Further, a position at a distance of 10.0% of the radius of the lens base 10 from the center O of the lens base 10 along the line on the -100.0% position side with respect to the center O of the lens base 10 is a position of -10.0% from the center O of the lens base 10.

The first position P1 is situated on a line from the center O of the lens base 10 to a position distanced from the center O of the lens base 10 by 15.0% of the radius of the lens base 10. That is, the first position P1 is a position of 0.0 to -15.0% from the center O of the lens base 10 in FIG. 2. FIG. 2 illustrates an embodiment in which the first position P1 does not coincide with the center O of the lens base 10, but the first position P1 may coincide with the center O of the lens base 10.

The second position P2 is situated on a line from a position distanceced from the center O of the lens base 10 by 15.0% of the radius of the lens base 10 to a position distanced from the center O of the lens base 10 by 25.0% of the radius of the lens base 10. That is, the second position P2 is a position of 15.0 to 25.0% from the center O of the lens base 10 in FIG. 2.

The coating thickness of the hard coat layer formed by the method for producing a lens according to the present disclosure is not particularly limited and is preferably not less than 1 µm, more preferably not less than 5 µm, and even more preferably not less than 10 µm. The upper limit of the coating thickness may be not more than 30 µm, for instance.

The above coating thickness is the average coating thickness, which is determined by measuring the coating thickness of the hard coat layer at given five points and calculating the arithmetic mean of the measurements.

After the hard coat layer-forming composition is applied by the spin coating method, drying treatment, curing treatment, and other predetermined treatments may be performed as necessary to form the hard coat layer.

The drying treatment is not particularly limited as long as it is a method for removing a solvent contained in the hard coat layer-forming composition, and for example, the drying treatment may be natural drying, a method of blowing dry air, or heat drying.

Specifics of the curing treatment can be appropriately selected depending on the components contained in the hard coat layer-forming composition, and examples thereof include heat treatment and light irradiation treatment.

The temperature for the heat treatment may be any temperature at which the lens base does not deform and is, for example, 30 to 100°C. The drying time is, for example, 1 to 360 minutes.

The light for the light irradiation treatment is not particularly limited, and examples thereof include a UV ray and a visible ray. The light source may be a high-pressure mercury vapor lamp.

The cumulative light quantity in the light irradiation treatment is not particularly limited and is preferably 100 to 3,000 mJ/cm² and more preferably 100 to 1,500 mJ/cm².

The curing treatment and the drying treatment may be performed simultaneously, or the drying treatment may double as the curing treatment.

### [Other steps]

It suffices if the method for producing a lens according to the present disclosure includes a formation step using a predetermined spin coating method with the above-described hard coat layer-forming composition, and other steps may be included.

The method for producing a lens according to the present disclosure may include a step of forming another layer on the hard coat layer.

Examples of the other layer include an antireflection layer, a water repellent layer, an anti-fouling layer, and an anti-fog layer. A known method can be used as the method for forming the foregoing other layer.

The method for producing a lens according to the present disclosure may include another step prior to formation of the hard coat layer. Examples of the other step include a pre-wet step.

The pre-wet treatment is not particularly limited as long as a coating film made of a base surface pre-wet liquid is formed. Examples of the method of the pre-wet treatment include dip coating, spin coating, spray coating, ink jet coating, and flow coating, and spin coating is preferred in terms of performing pre-wet treatment more uniformly.

A known organic solvent can be used as the pre-wet liquid.

Examples of the organic solvent include an alcohol solvent, an ether solvent, and an ester solvent, and an alcohol solvent is preferred.

The method for producing a lens according to the present disclosure may include a step of forming a configuration of a lens base to be described later.

Specifically, a step of forming another layer such as a primer layer on a lens may be included, for example.

A spin coating device used in the method for producing a lens according to the present disclosure is not particularly limited as long as it includes a pedestal capable of fixing and rotating a lens base, and a nozzle capable of discharging a hard coat layer-forming composition in a predetermined movement.

Described below in detail are members (the lens base and the hard coat layer-forming composition) used in the method for producing a lens according to the present disclosure.

### <Lens base>

The lens base is not particularly limited in type and is preferably a spectacle lens. In a case where the lens is for spectacles, examples thereof include a finished lens that is obtained through optical finishing of both the convex and concave surfaces and shaping according to a desired power, a semi-finished lens whose convex surface is solely finished as an optical surface (e.g., a spherical surface, a rotationally symmetric aspheric surface, a progressive surface), and a lens obtained by processing and polishing the concave surface of a semi-finished lens according to the prescription of the wearer.

A material of the lens base is not particularly limited, and examples thereof include a glass lens and a plastic lens, with a plastic lens being preferred.

An example of the glass lens is an inorganic glass lens.

Plastic (so-called resin) contained in the plastic lens is not particularly limited in type, and examples thereof include (meth)acrylic ester resin, thiourethane resin, allyl resin, episulfide resin, polycarbonate resin, urethane resin, polyester resin, polystyrene resin, polyethersulfone resin, poly-4-methylpentene-1 resin, and diethylene glycol bis(allyl carbonate) resin (CR-39). Among those, thiourethane resin, episulfide resin, and diethylene glycol bis(allyl carbonate) resin is preferably used.

Thiourethane resin is obtained from a polyisocyanate compound and a polythiol compound.

As the polyisocyanate compound, at least one selected from m-xylylene diisocyanate, a mixture of 2,5-bis(isocyanatomethyl)-bicyclo[2,2,1]heptane and 2,6-bis(isocyanatomethyl)-bicyclo[2,2,1]-heptane, isophorone diisocyanate, hexamethylene diisocyanate, and tolylene diisocyanate is preferably used.

As the polythiol compound, at least one selected from pentaerythritol tetrakis(3-mercaptopropionate), 1,2-bis[(2-mercaptoethyl)thio]-3-mercaptopropane, and a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane is preferably used.

The episulfide resin is obtained by ring-opening polymerization of a monomer having an episulfide group (also referred to as epithio group) or a mixed monomer containing the monomer. As the monomer having an episulfide group, at lease one selected from bis(2,3-epithiopropyl)sulfide and bis(2,3-epithiopropyl)disulfide is preferably used.

The lens base is preferably translucent and may be either transparent or non-transparent. The lens may be colored.

The lens base may contain additives such as a bluing agent, a light stabilizer, an ultraviolet absorber, and an antioxidant.

The lens base may include another layer in addition to a lens such as a plastic lens or a glass lens. For example, the lens base may be a base in which another layer is formed on a surface of a plastic lens.

An example of the other layer is a primer layer.

The primer layer can improve the adhesion of the hard coat layer, which is formed in the step described in the present disclosure, to the lens and impart the impact resistance to the obtained lens.

The primer layer may be formed only on one surface of the plastic lens or may be formed on both surfaces of the plastic lens.

A material constituting the primer layer is not particularly limited, and any known materials are usable. For instance, resin is mainly used. The resin for use is not particularly limited in type, and examples thereof include polyurethane resin, polyester resin, and polyvinyl alcohol, with polyurethane resin being preferred.

The primer layer may include other components than the foregoing resin.

Examples of other components include: fine particles of an oxide of at least one metal selected from Si, Al, Sn, Sb, Ta, Ce, La, Fe, Zn, W, Zr, In and Ti or composite oxide fine particles thereof; hydrolyzable silicon compound and/or a hydrolyzed condensate thereof; and a surfactant.

The method for forming the primer layer is not particularly limited, and a known method may be employed. An exemplary method involves applying a primer layer-forming composition containing a predetermined resin onto a plastic lens, optionally followed by curing treatment, thereby forming the primer layer.

A method for applying the primer layer-forming composition is not particularly limited, and examples thereof include dip coating, spin coating, spray coating, ink jet coating, and flow coating. In addition, use can be also made of a method of applying the hard coat layer-forming composition of the present invention onto a base.

The thickness of the primer layer is not particularly limited and is preferably 0.3 to 2 µm.

The thickness of the lens base is not particularly limited and is about 1 to about 30 mm in many cases for the sake of handleability. In a case where the thickness of the lens has a distribution, the center thickness preferably satisfies the above range.

The size (diameter) of the lens is not particularly limited and is 1 to 200 mm in many cases. In a case where the lens is for spectacles, the size of the lens is 50 to 100 mm in many cases.

The refractive index of the lens base is not particularly limited and is not less than 1.50 in many cases, preferably 1.60 to 1.80, and more preferably 1.60 to 1.74.

### <Hard coat layer-forming composition>

The hard coat layer-forming composition contains a component which may constitute a hard coat layer.

The hard coat layer-forming composition preferably contains a component constituting a hard coat layer and a solvent.

The hard coat layer-forming composition preferably contains a silsesquioxane compound.

A silsesquioxane compound is generally a silane compound having the basic structure represented by Formula (D) as obtained through hydrolysis of a trifunctional silane compound such as alkoxysilane, chlorosilane, or silanol. Known examples of the structure of the silsesquioxane compound include, in addition to an irregular form called a random structure, a ladder structure, a cage type (completely condensed cage type) structure, and an incomplete cage type structure (which is a partially cleaved structure of cage type structure; e.g., a structure lacking part of silicon atoms in a cage type structure, a structure in which a silicon-oxygen bond is cleaved in part of a cage type structure).

In Formula (D) below, R^{d} denotes an organic group.

Formula (D) R^{d}-SiO_{3/2}

The structure of the silsesquioxane compound contained in the hard coat layer-forming composition may be any of the random structure, the ladder structure, the cage type structure, the incomplete cage type structure, and combinations of plural structures.

The silsesquioxane compound preferably has a polymerizable group. As the polymerizable group, a radical polymerizable group or a cationic polymerizable group is preferred.

As the radical polymerizable group contained in the silsesquioxane compound, a group having an ethylenically unsaturated bond is preferred. Examples of the group having an ethylenically unsaturated bond include a (meth)acryloyl group, a styryl group and a vinyl group.

When the silsesquioxane compound contains a radical polymerizable group, the equivalent of radical polymerizable group contained in the silsesquioxane compound is not particularly limited and is preferably 30 to 500 g/eq. and more preferably 30 to 150 g/eq. because the resulting hard coat layer can have more excellent hardness.

The silsesquioxane compound having a radical polymerizable group may be obtained through synthesis by a known method or may be a commercial product.

The cationic polymerizable group contained in the silsesquioxane compound is not particularly limited, and examples thereof include an oxetanyl group and an epoxy group.

The above-described oxetanyl group is a group represented by Formula (2) below. R² denotes a hydrogen atom or an alkyl group (e.g., methyl group, ethyl group, or propyl group). * denotes a bonding position.

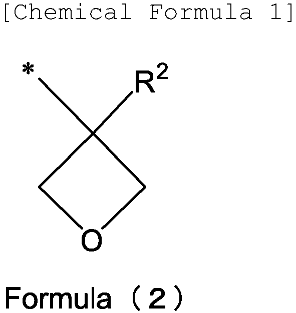

The above-described epoxy group is a group represented by Formula (3) below. R¹ denotes a hydrogen atom or an alkyl group (e.g., methyl group, ethyl group, or propyl group). * denotes a bonding position.

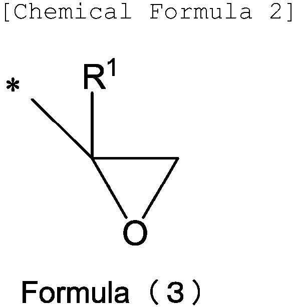

The specific silsesquioxane may be obtained through synthesis by a known method or may be a commercial product. Exemplary commercial products include OX-SQ TX-100, OX-SQ SI-20, OX-SQ HDX, and OX-SQ ME-20 manufactured by Toagosei Co., Ltd.

The content of the silsesquioxane compound having a polymerizable group in the hard coat layer-forming composition is not particularly limited and is preferably 10 to 60 mass% and more preferably 20 to 55 mass% based on the total solids of the hard coat layer-forming composition.

The hard coat layer-forming composition may contain metal oxide particles.

The metal oxide particles are not particularly limited in type, and known metal oxide particles are usable. Examples of the metal oxide particles include particles of an oxide of at least one metal selected from Si, Al, Sn, Sb, Ta, Ce, La, Fe, Zn, W, Zr, In and Ti. In particular, the metal oxide particles are preferably particles of a Si-containing oxide (silicon oxide particles), particles of a Sn-containing oxide (tin oxide particles), particles of a Zr-containing oxide (zirconium oxide particles), or particles of a Ti-containing oxide (titanium oxide particles) for the sake of handleability.

The metal oxide particles may contain, from the metals listed above, one metal (one type of metallic atoms) alone or two or more metals (two or more types of metallic atoms).

Si (silicon) is sometimes classified as metalloid but is classified as metal in the present description.

The average particle size of the metal oxide particles is not particularly limited and is preferably 1 to 200 nm and more preferably 5 to 30 nm, for instance. When the average particle size is within the above range, the metal oxide particles exhibit excellent dispersion stability in the hard coat layer-forming composition, while whitening of the resulting cured product can be further suppressed.

The average particle size above is determined by measuring the diameters of at least one hundred metal oxide particles with a transmission electron microscope and calculating the arithmetic mean of the measurements. When the metal oxide particles do not have a perfect circle shape, the major axis length is regarded as the diameter.

Various functional groups may optionally be introduced to surfaces of the metal oxide particles.

The metal oxide particle content in the hard coat layer-forming composition is not particularly limited and is preferably 10 to 70 mass% and more preferably 25 to 55 mass% based on the total solids of the hard coat layer-forming composition.

The hard coat layer-forming composition may contain a polymerizable monomer. The silsesquioxane compound having the above-described polymerizable group is not included in the above-described polymerizable monomer.

The polymerizable monomer refers to a compound having a polymerizable group. Examples of the polymerizable monomer include a compound having a radically polymerizable group and a compound having a cationically polymerizable group. In the polymerizable monomer, the number of polymerizable groups included in the polymerizable monomer is preferably 2 to 6, and more preferably 2 to 3.

The compound having a radically polymerizable group is preferably a (meth)acrylate compound. The (meth)acrylate compound refers to a concept including a compound containing a methacryloyl group and a compound containing an acryloyl group.

The (meth)acrylate compound is preferably a polyfunctional (meth)acrylate compound having two or more radically polymerizable groups (methacryloyl groups or acryloyl groups) in the molecule, and the preferable number of polymerizable groups is as described above.

The above-described (meth)acrylate compound may be a compound having a group selected from the group consisting of a phosphoric acid group and a sulfonic acid group.

As the polyfunctional (meth)acrylate, a compound represented by Formula (E) is preferred.

Formula (E) CH₂=CR^{e1}-CO-L^{e1}-CO-CR^{e2}=CH₂

R^{e1} and R^{e2} each independently denote a hydrogen atom or a methyl group.

L^{e1} denotes a divalent hydrocarbon group that may include a heteroatom (e.g., oxygen atom, nitrogen atom, sulfur atom). The number of carbon atoms in the divalent hydrocarbon group is not particularly limited and is preferably 1 to 10. Examples of the divalent hydrocarbon group include an alkylene group, an alkenylene group, an alkynylene group, an arylene group, and combinations thereof, each of which may include a heteroatom, with an alkylene group which may include a heteroatom being preferred.

In particular, an alkylene group including an oxygen atom is preferred, and a group represented by -O-(L^{e2}-O)ᵣ-is preferred. L^{e2} denotes an alkylene group (having preferably 1 to 3 carbon atoms). r denotes an integer of at least 1, preferably an integer of 1 to 10, and more preferably an integer of 2 to 5.

A single kind of the (meth)acrylate compound may be used alone or two or more kinds thereof may be used in combination.

The compound having a cationically polymerizable group is preferably an epoxy compound having an epoxy group. The epoxy group is a group represented by Formula (3) above.

The epoxy compound is preferably a polyfunctional epoxy compound having two or more epoxy groups in the molecule, and the preferable number of polymerizable groups is as described above.

The type of the polyfunctional epoxy compound is not particularly limited, and known polyfunctional epoxy compounds are usable. Examples of the polyfunctional epoxy compound include a bisphenol A type epoxy compound, a bisphenol F type epoxy compound, a phenol novolac type epoxy compound, a cresol novolac type epoxy compound, and an aliphatic glycidyl ether type epoxy compound.

A single kind of the epoxy compound may be used alone, or two or more kinds thereof may be used in combination.

The hard coat layer-forming composition may contain at least one selected from the group consisting of a hydrolyzable silicon compound, a hydrolysate thereof, and a hydrolyzed condensate thereof (hereinafter also simply called "hydrolyzable silicon compound(s)"). The hydrolyzable silicon compound refers to a compound in which a hydrolyzable group is bonded to a silicon atom.

The hydrolyzable silicon compound is preferably the compound represented by Formula (H).

Formula (H) R^{h1}-L^{f}-Si(R^{h2})₅(R^{h2})₃₋ₛ

R^{h1} denotes an epoxy group.

The definition of the epoxy group is as described above.

L^{h} denotes a divalent hydrocarbon group that may include a heteroatom. The number of carbon atoms in the hydrocarbon group is not particularly limited and is preferably 1 to 10. Examples of the divalent hydrocarbon group include an alkylene group, an alkenylene group, an alkynylene group, an arylene group, and combinations thereof, and an alkylene group that may include a heteroatom is preferred.

R^{h2} denotes a hydrolyzable group. The hydrolyzable group is directly bonded to Si (silicon atom) and may promote a hydrolysis reaction and/or a condensation reaction. Examples of the hydrolyzable group include an alkoxy group, a hydroxyl group, a halogen atom, an acyloxy group, an alkenyloxy group and an isocyanate group.

R^{h3} denotes an alkyl group. The number of carbon atoms in the alkyl group represented by R^{h3} is preferably 1 to 10.

s denotes an integer of 1 to 3. s is preferably 3.

A hydrolysate of the hydrolyzable silicon compound refers to a compound obtained through hydrolysis of one or more hydrolyzable groups in the hydrolyzable silicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate, or a mixture thereof.

A hydrolyzed condensate of the hydrolyzable silicon compound refers to a compound obtained through hydrolysis of one or more hydrolyzable groups in the hydrolyzable silicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate, or a mixture thereof.

When the hydrolyzable silicon compound(s) is contained in the hard coat layer-forming composition, the content of the hydrolyzable silicon compound(s) is not particularly limited and is preferably 0.5 to 30 mass% and more preferably 1 to 10 mass% based on the total solids of the hard coat layer-forming composition.

The hard coat layer-forming composition may contain a radical polymerization initiator. Examples of the radical polymerization initiator include a photo-radical polymerization initiator and a thermal-radical polymerization initiator.

The hard coat layer-forming composition may contain a cationic polymerization initiator. Examples of the cationic polymerization initiator include a photo-cationic polymerization initiator and a thermal-cationic polymerization initiator.

The hard coat layer-forming composition may optionally contain various additives such as a UV absorber, a surfactant, an antiaging agent, a coating adjusting agent, a light stabilizer, an antioxidant, a discoloration preventing agent, a dye, a filler and an internal mold release agent.

The hard coat layer-forming composition preferably contains a solvent in terms of dischargeability and coatability in the spin coating method.

The solvent is not particularly limited and may be water or an organic solvent.

Examples of the organic solvent include an alcoholic solvent, a ketone solvent, an ether solvent, an ester solvent, a hydrocarbon solvent, a halogenated hydrocarbon solvent, an amide solvent, a sulfone solvent, and a sulfoxide solvent.

The alcohol solvent is preferably an alcohol solvent having 10 or less carbon atoms and more preferably an alcohol solvent having 5 or less carbon atoms (e.g., isopropanol). The alcohol solvent may be a polyhydric alcohol having two or more hydroxy groups in the molecule.

As the solvent, one type may be used alone, or two or more types may be used in combination.

The total solid content in the hard coat layer-forming composition is preferably 10 to 90 mass% and more preferably 40 to 80 mass% based on the total mass of the hard coat layer-forming composition.

The viscosity of the hard coat layer-forming composition at a temperature of 25°C is preferably not lower than 10 mPa·s, more preferably not lower than 13 mPa·s, and even more preferably not lower than 15 mPa·s in terms of the coating thickness. The upper limit of the viscosity of the hard coat layer-forming composition at a temperature of 25°C is preferably not higher than 25 mPa·s, and more preferably not higher than 20 mPa·s in terms of coatability. By the method for producing a lens according to the present disclosure, a hard coat layer with few defects can be formed even when the viscosity of the hard coat layer-forming composition at a temperature of 25°C is not lower than 10 mPa·s.

The viscosity can be measured using a known measurement apparatus (e.g., cone and plate viscometer).

The hard coat layer-forming composition may be prepared by mixing the above-described components. The method of mixing is not particularly limited, and any known method can be adopted.

Here, when the hard coat layer-forming composition includes a silsesquioxane having a cationically polymerizable group and metal oxide particles, it is preferable to obtain the hard coat layer-forming composition by the following procedure from the viewpoint of suppressing a change with time in viscosity during storage.

First, as Step A, a mixture containing silsesquioxane having a cationically polymerizable group and metal oxide particles is heat-treated at a temperature higher than 60°C. Next, as Step B, the mixture obtained in Step A and the cationic polymerization initiator are mixed to obtain the hard coat layer-forming composition.

The heating temperature for heating the mixture in Step A is preferably 60°C, more preferably not lower than 80°C, even more preferably not lower than 100°C, particularly preferably not lower than 120°C, and most preferably not lower than 140°C.

The upper limit of the temperature for heating is not particularly limited and is preferably 200°C or lower.

The heating temperature refers to a set temperature in a heating device (such as a hot plate) used for heating the mixture.

### <Lens>

Below, described is a lens obtained by the method for producing a lens according to the present disclosure.

FIG. 3 is an example of a lens obtained by the method for producing a lens according to the present disclosure.

A lens 40 shown in FIG. 3 includes a plastic lens 30, a primer layer 32, a hard coat layer 34, an antireflection film 36, and a water and oil repellent layer 38 in this order.

In the lens 40 shown in FIG. 3, the primer layer 32, the hard coat layer 34, the antireflection film 36, and the water and oil repellent layer 38 are formed in this order on one side of the plastic lens 30, but a primer layer, a hard coat layer, an antireflection film, and a water and oil repellent layer may be formed in this order on the surface of the plastic lens 30 opposite to the primer layer 32 side in FIG. 3.

In addition, in the lens 40 shown in FIG. 3, any one or more of the primer layer 32, the antireflection film 36, and the water and oil repellent layer 38 may be omitted.

The plastic lens 30, the primer layer 32, and the hard coat layer 34 are as described above, and the preferred embodiments are also as described above. Hereinafter, the antireflection film and the water and oil repellent layer that may be included in the lens obtained by the method for producing a lens according to the present disclosure (hereinafter, also simply referred to as "obtained lens") will be described.

### [Antireflection film]

The obtained lens may have an antireflection film. The antireflection film is preferably disposed on the side of the hard coat layer opposite to the plastic lens.

The antireflection film is a layer having a function of preventing reflection of incident light. Specifically, the antireflection film may have low reflection characteristics over the entire visible range from 380 to 780 nm (wide-band low reflection characteristics).

The antireflection film is not particularly limited in structure and may be of a single layer structure or a multilayer structure.

For the antireflection film, an inorganic antireflection film is preferred. The inorganic antireflection film is an antireflection film constituted of an inorganic compound.

In the case of multilayer structure, it is preferable to have the structure in which a low refractive index layer(s) and a high refractive index layer(s) are alternately stacked. Exemplary materials that may be used to form the high refractive index layer include oxides of titanium, zirconium, aluminum, niobium, tantalum and lanthanum. Exemplary materials that may be used to form the low refractive index layer include oxides such as silica.

The producing method of the antireflection film is not particularly limited, and examples thereof include dry methods such as vacuum evaporation, sputtering, ion plating, ion-beam assisted deposition and CVD.

### [Water and oil repellent layer]

The obtained lens may have a water and oil repellent layer. Preferably, the water and oil repellent layer is disposed as the outermost layer of the lens.

The water and oil repellent layer decreases the surface energy of the lens and improves the contamination preventing function of the lens and the sliding properties of the surface of the lens, thus improving the wear resistance of the lens.

Preferably, the water and oil repellent layer is provided in a case where the obtained lens is a spectacle lens.

A material constituting the water and oil repellent layer is not particularly limited, and examples thereof include a fluorine-containing compound (compound containing a fluorine atom) and a silicon-containing compound (compound containing a silicon atom). In particular, the water and oil repellent layer preferably contains a fluorine-containing compound and more preferably contains at least one selected from the group consisting of a fluorine-substituted, alkyl group-containing organosilicon compound, a hydrolysate thereof, and a hydrolyzed condensate thereof.

For the material constituting the water and oil repellent layer, one material may be used alone, or two or more materials may be used in combination.

The fluorine-substituted, alkyl group-containing organosilicon compound refers to an organosilicon compound containing an alkyl group with a part of or all of hydrogen atoms being substituted with fluorine atoms and has a hydrolyzable group.

The hydrolyzable group is directly connected to a silicon atom and may promote a hydrolysis reaction and a condensation reaction, and examples thereof include an alkoxy group, a halogen atom, an acyloxy group, an alkenyloxy group, and an isocyanate group. In a case where plural hydrolyzable groups are directly connected to one silicon atom, they may be the same or different.

A hydrolysate of the fluorine-substituted alkyl group-containing organosilicon compound refers to a compound obtained through hydrolysis of a hydrolyzable group(s) in the fluorine-substituted alkyl group-containing organosilicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate, or a mixture thereof.

A hydrolyzed condensate of the fluorine-substituted, alkyl group-containing organosilicon compound refers to a compound obtained through hydrolysis of one or more hydrolyzable groups in the fluorine-substituted, alkyl group-containing organosilicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate, or a mixture thereof.

The thickness of the water and oil repellent layer included in the obtained lens is not particularly limited and is preferably 5 to 35 nm.

The method of forming the water and oil repellent layer is not particularly limited and may be arbitrarily selected depending on the material for use, the desired performance or thickness, and other factors. Exemplary methods include a method involving coating a water and oil repellent layer-forming composition containing the fluorine-substituted, alkyl group-containing organosilicon compound onto the base, optionally followed by curing treatment, and a dry method.

Examples of the coating method include a dip coating method, a roll coating method, a bar coating method, a spin coating method, a spray coating method, a die coating method, and a gravure coating method.

Examples of the curing treatment include a light irradiation treatment, a heat treatment, and a steam contact treatment. Examples of the steam contact treatment include a treatment in which the coating film is brought into contact with air whose humidity is controlled to 50 to 90%RH. The curing treatments above may be performed in combination.

The dry method may be, for example, the same method as that for the above-described antireflection film.

### <Application>

The lens obtained by the method for producing a lens according to the present disclosure is suitably used for various lenses. In particular, it is preferably used as a spectacle lens.

### [EXAMPLES]

The present disclosure is described below in further detail by way of examples; however, the present disclosure should not be construed as being limited to the following examples.

### [Preparation of hard coat layer-forming composition]

In a glass container with a stirrer, (A) cationic curing silsesquioxane (OX-SQ TX-100 manufactured by Toagosei Co., Ltd.) (27.13 g) as silsesquioxane and (B) colloidal silica (OSCAL-1432E, isopropanol dispersion liquid, solid content 30 mass%, manufactured by JGC Catalysts and Chemicals Ltd.) (90.45 g) as metal oxide particles were added, whereby a mixture was obtained.

The resulting mixture was stirred for 6 hours while being heated on a hot plate set at a temperature of 160°C. At this time, the glass container was sealed with a lid, and a solvent in the mixture was being refluxed.

After completion of the heating, the obtained reaction liquid was cooled to room temperature overnight, and then 2-butoxyethanol (10.85 g) was added as a solvent for film formation to the cooled reaction liquid. Subsequently, isopropanol was distilled off from the reaction liquid under reduced pressure at a temperature of 40°C over 2 hours.

Methanol (33.40 g) was added to the obtained crude product to obtain a liquid composition X1.

In the glass container with a stirrer, the liquid composition X1 obtained in the above-described step 1 (98.52 g), (D) SbF₆⁻ based sulfonium salt (SAN-AID SI-150L, manufactured by SANSHIN CHEMICAL INDUSTRY CO., LTD.) (0.52 g) as a cationic polymerization initiator, (F) a hydroxyphenyl triazine UV absorber (Tinuvin 477, manufactured by BASF Japan Ltd.) (0.62 g) as a UV absorber, and (G) polyether-modified silicone (DOWSIL L-7001, manufactured by Dow Corning Toray Co., Ltd.) (0.33 g) as a surfactant were added and mixed, whereby a hard coat layer-forming composition was obtained. The viscosity of the hard coat layer-forming composition at a temperature of 25°C was 16.8 mPa·s.

### [Preparation of primer layer-forming composition]

To an aqueous urethane dispersion (EVAFANOL HA-170, manufactured by Nicca Chemical Co., Ltd.; solid content concentration, 37 mass%) (200 parts by mass), pure water (179 parts by mass), and 501W ADDITIVE (manufactured by The Dow Chemical Company) (1.1 parts by mass) and L-7001 (manufactured by The Dow Chemical Company) (1.1 parts by mass) as surfactants were added and stirred, whereby a primer layer-forming composition with a solid content concentration of 20.0 mass% was obtained.

### [Formation of primer layer]

A lens (Nikon Lite AS material S-3.00D, manufactured by Nikon-Essilor Co., Ltd.) with a refractive index of 1.60 was prepared as a plastic lens. The diameter of the plastic lens was 80 mm.

The primer treatment was performed as follows: the base was placed on a spin coater, the base was rotated at 500 rpm for 2 seconds, 2.5 mL of the primer layer-forming composition was dropped from the outer periphery portion to the center portion of the base during the rotation, then the base on which the primer layer-forming composition was dropped was further rotated for 5 seconds after reaching 600 rpm in 10 seconds, and the base was further rotated for 3 seconds after reaching 2000 rpm. By performing the primer treatment, a coating film of the primer layer-forming composition was formed on the base.

A lens base was obtained in this manner. A projection figure of the lens base projected from the optical axis direction thereof was a circle of a diameter of 80 mm.

### [Pre-wet treatment]

The base having the primer layer formed by the above-described procedure was subjected to the pre-wet treatment.

A mixed solution of 75 mass% of methanol and 25 mass% of 2-butoxyethanol was used as a pre-wet liquid.

The pre-wet treatment was performed as follows: first, the base was placed on a spin coater, the base was rotated at 300 rpm for 2 seconds, 4 mL of the pre-wet liquid was dropped from the center portion to the outer peripheral portion of the base during the rotation, and then the base onto which the pre-wet liquid had been dropped was further rotated at 1000 rpm for 1 second. By performing the pre-wet treatment, a coating film of the pre-wet liquid was formed on the base.

The temperature of the base immediately before the pre-wet treatment was adjusted to 30 to 40°C.

### [Formation of hard coat layer]

The hard coat layer-forming composition was applied by a spin coating method to the surface of the base on which the coating film of the pre-wet liquid had been formed by performing the pre-wet treatment with the above procedure, thereby forming a coating film of the hard coat layer-forming composition.

While the base having been subjected to the pre-wet treatment was rotated at 300 rpm, the hard coat layer-forming composition was discharged in the predetermined amount shown in the tables along with movement from the predetermined first position shown in the table to the predetermined second position shown in the table over 2 seconds. Further, the base onto which the hard coat layer-forming composition had been dropped was rotated at 300 rpm for 15 seconds, further rotated for 1 second after reaching 400 rpm in 5 seconds, further rotated for 1 second after reaching 700 rpm in 5 seconds, further rotated for 1 second after reaching 1000 rpm in 5 seconds, and further rotated for 1 second after reaching 1500 rpm in 5 seconds.

The first position and the second position in the tables each represent a position, when the center of the lens base is defined as a position of 0.0% distance from the center of the lens base, an end of the lens base as a position of 100.0% distance from the center of the lens base, and the other end of the lens base as a position of - 100.0% distance from the center of the lens base on the line passing the center of the lens base as shown in FIG. 2.

For instance, in a case where the first position is - 10.0% while the second position is 20.0%, the second position is situated opposite from the first position across the center of the lens base, and the first position is distanced from the center of the lens base by 10.0% (4 mm) of the radius (40 mm) of the lens base, and the second position is distanced from the center of the lens base by 20.0% (8 mm) of the radius (40 mm) of the lens base. Moreover, for instance, in a case where the first position is 5.0% while the second position is 20.0%, the center of the lens base, the first position, and the second position are aligned along a single line in this order, and the first position is distanced from the center of the lens base by 5.0% (2 mm) of the radius (40 mm) of the lens base, and the second position is distanced from the center of the lens base by 20.0% (8 mm) of the radius (40 mm) of the lens base.

After the coating film of the hard coat layer-forming composition was formed by the above-described procedure, the base was heated at 80°C for 20 minutes, and additionally heated at 100°C for 1 hour to form a cured film, whereby a lens of each example and comparative example was obtained. The cured film formed had an average coating thickness of 15 to 16 um.

### <Evaluation>

### [Coatability]

The lens obtained by the foregoing procedure was checked as to whether a hard coat layer was formed on an entire surface of the lens under a fluorescent lamp.

When an entire surface of a lens is coated, the coatability is excellent and acceptable.

When a region free of a coating is generated near the center, it is unacceptable.

Only lenses having acceptable coatability were subjected to the following evaluations for a round-shaped defect and a vortex-shaped defect, while unacceptable lenses were not subjected to the following evaluations for a round-shaped defect and a vortex-shaped defect.

### [Round-shaped defect]

The lens obtained by the foregoing procedure was checked under a fluorescent lamp and under an ultra-high pressure mercury lamp to determine whether it had a round-shaped defect, and non-observability of a round-shaped defect was evaluated according to the following evaluation criteria. A and B ratings are preferred in practical use. Here, a round-shaped defect means a round-shaped or dot-like defect with a diameter of about 1 to 10 mm.
A: no round-shaped defect was observed under either an ultra-high pressure mercury lamp or a fluorescent lamp.
B: a light round-shaped defect(s) was observed only under an ultra-high pressure mercury lamp, and no round-shaped defect was observed under a fluorescent lamp.
C: a light round-shaped defect(s) and a dark round-shaped defect(s) were observed under an ultra-high pressure mercury lamp, and a light round-shaped defect(s) was observed while no dark round-shaped defect was observed under a fluorescent lamp.
D: a light round-shaped defect(s) and a dark round-shaped defect(s) were observed under both an ultra-high pressure mercury lamp and a fluorescent lamp.

### [Vortex-shaped defect]

The lens obtained by the foregoing procedure was checked under a fluorescent lamp and under an ultra-high pressure mercury lamp to determine whether it had a vortex-shaped defect, and non-observability of a vortex-shaped defect was evaluated according to the following evaluation criteria. A and B ratings are preferred in practical use. Here, a vortex-shaped defect means a swirling streak-like defect.
A: no vortex-shaped defect was observed under either an ultra-high pressure mercury lamp or a fluorescent lamp.
B: a light vortex-shaped defect(s) was observed only under an ultra-high pressure mercury lamp, and no vortex-shaped defect was observed under a fluorescent lamp.
C: a light vortex-shaped defect(s) and a dark vortex-shaped defect(s) were observed under an ultra-high pressure mercury lamp, and a light vortex-shaped defect(s) was observed while no dark vortex-shaped defect was observed under a fluorescent lamp.
D: a light vortex-shaped defect(s) and a dark vortex-shaped defect(s) were observed under both an ultra-high pressure mercury lamp and a fluorescent lamp.

### [Comprehensive evaluation]

Based on the evaluation results of the coatability as well as the round-shaped defect and the vortex-shaped defect, the state of the hard coat layer was evaluated according to the following evaluation criteria. A and B ratings are preferred in practical use.
A: ratings of the round-shaped defect and the vortex-shaped defect were both A.
B: a rating of at least one of the round-shaped defect or the vortex-shaped defect was B while a rating of the other one was A or B.
C: a rating of at least one of the round-shaped defect or the vortex-shaped defect was C while a rating of the other one was A, B, or C.
D: a rating of at least one of the round-shaped defect or the vortex-shaped defect was D.

### <Results>

Table 1 to Table 3 show the first position and the second position, the discharge amount of the hard coat layer-forming composition, and the evaluation result of each of Examples and Comparative Examples.

Table 1 shows the evaluation results of the round-shaped defect, Table 2 the evaluation results of the vortex-shaped defect, and Table 3 the comprehensive evaluation results.

In the tables, the values as to the first position and the second position are as described earlier.

In the tables, "-" means that the coatability was not acceptable, and the relevant item in the tables was not evaluated.

**[Table 1]**

| Table 1 | First position | Second position | | | | | | | | | | | |
|---|---|---|---|---|---|---|---|---|---|---|---|---|---|
| Discharge amount | | 2.5% | 5.0% | 7.5% | 10.0% | 12.5% | 15.0% | 17.5% | 20.0% | 22.5% | 25.0% | 27.5% | 30.0% |
| 0.0004 g/mm² | 5.0% | - | - | - | - | - | - | - | - | - | - | - | - |
| | 0.0% | D | D | D | D | D | D | A | A | A | A | A | A |
| | -2.5% | D | D | D | D | D | A | A | A | A | A | A | A |
| | -5.0% | D | D | D | D | D | D | D | D | A | A | A | A |
| | -7.5% | D | D | D | D | D | D | D | A | A | A | A | A |
| | -10.0% | D | D | D | D | D | D | A | A | A | A | A | A |
| | -12.5% | D | D | D | D | D | D | A | A | A | A | A | A |
| | -15.0% | D | D | D | D | D | D | A | A | A | A | A | A |
| | -17.5% | D | D | D | D | D | D | A | A | A | A | A | A |
| | -20.0% | D | D | D | D | D | D | A | A | A | A | A | A |
| 0.0006 g/mm² | 5.0% | - | - | - | - | - | - | - | - | - | - | - | - |
| | 0.0% | D | D | D | D | D | D | A | A | A | A | A | A |
| | -2.5% | D | D | D | D | D | B | A | A | A | A | A | A |
| | -5.0% | D | D | D | D | D | D | A | A | A | A | A | A |
| | -7.5% | D | D | D | D | D | D | D | A | A | A | A | A |
| | -10.0% | D | D | D | D | D | D | A | A | A | A | A | A |
| | -12.5% | D | D | D | D | D | B | A | A | A | A | A | A |
| | -15.0% | D | D | D | D | D | B | A | A | A | A | A | A |
| | -17.5% | D | D | D | D | D | B | A | A | A | A | A | A |
| | -20.0% | D | D | D | D | D | B | A | A | A | A | A | A |
| 0.0008 g/mm² | 5.0% | - | - | - | - | - | - | - | - | - | - | - | - |
| | 0.0% | D | D | D | D | D | B | A | A | A | A | A | A |
| | -2.5% | D | D | D | D | D | B | A | A | A | A | A | A |
| | -5.0% | D | D | D | D | D | A | A | A | A | A | A | A |
| | -7.5% | D | D | D | D | D | B | A | A | A | A | A | A |
| | -10.0% | D | D | D | D | D | B | A | A | A | A | A | A |
| | -12.5% | D | D | D | D | D | B | A | A | A | A | A | A |
| | -15.0% | D | D | D | D | D | B | A | A | A | A | A | A |
| | -17.5% | D | D | D | D | D | B | A | A | A | A | A | A |
| | -20.0% | D | D | D | D | D | B | A | A | A | A | A | A |

**[Table 2]**

| Table 2 | First position | Second position | | | | | | | | | | | |
|---|---|---|---|---|---|---|---|---|---|---|---|---|---|
| Discharge amount | | 2.5% | 5.0% | 7.5% | 10.0% | 12.5% | 15.0% | 17.5% | 20.0% | 22.5% | 25.0% | 27.5% | 30.0% |
| 0.0004 g/mm² | 5.0% | - | - | - | - | - | - | - | - | - | - | - | - |
| | 0.0% | A | A | A | A | A | B | D | D | D | D | D | D |
| | -2.5% | A | A | A | A | B | D | D | D | D | D | D | D |
| | -5.0% | A | A | A | A | A | B | D | D | D | D | D | D |
| | -7.5% | A | A | A | A | A | A | B | D | D | D | D | D |
| | -10.0% | A | A | A | A | B | D | D | D | D | D | D | D |
| | -12.5% | A | A | A | A | B | D | D | D | D | D | D | D |
| | -15.0% | A | A | A | B | D | D | D | D | D | D | D | D |
| | -17.5% | A | A | A | B | D | D | D | D | D | D | D | D |
| | -20.0% | A | A | A | B | D | D | D | D | D | D | D | D |
| 0.0006 g/mm² | 5.0% | - | - | - | - | - | - | - | - | - | - | - | - |
| | 0.0% | A | A | A | A | A | B | D | D | D | D | D | D |
| | -2.5% | A | A | A | A | B | D | D | D | D | D | D | D |
| | -5.0% | A | A | A | A | A | B | D | D | D | D | D | D |
| | -7.5% | A | A | A | A | A | A | D | D | D | D | D | D |
| | -10.0% | A | A | A | A | B | D | D | D | D | D | D | D |
| | -12.5% | A | A | A | A | B | D | D | D | D | D | D | D |
| | -15.0% | A | A | A | A | B | D | D | D | D | D | D | D |
| | -17.5% | A | A | A | A | B | D | D | D | D | D | D | D |
| | -20.0% | A | A | A | A | B | D | D | D | D | D | D | D |
| 0.0008 g/mm² | 5.0% | - | - | - | - | - | - | - | - | - | - | - | - |
| | 0.0% | A | A | A | A | A | A | A | A | A | B | C | C |
| | -2.5% | A | A | A | A | A | A | A | A | A | A | C | C |
| | -5.0% | A | A | A | A | A | A | A | A | A | A | C | C |
| | -7.5% | A | A | A | A | A | A | A | A | A | A | C | C |
| | -10.0% | A | A | A | A | A | A | A | A | A | A | C | C |
| | -12.5% | A | A | A | A | A | A | A | A | A | B | C | C |
| | -15.0% | A | A | A | A | A | A | A | A | B | B | C | C |
| | -17.5% | A | A | A | A | A | C | C | C | C | C | C | C |
| | -20.0% | A | A | A | A | A | C | C | C | C | C | C | C |

**[Table 3]**

| Table 3 | First position | Second position | | | | | | | | | | | |
|---|---|---|---|---|---|---|---|---|---|---|---|---|---|
| Discharge amount | | 2.5% | 5.0% | 7.5% | 10.0% | 12.5% | 15.0% | 17.5% | 20.0% | 22.5% | 25.0% | 27.5% | 30.0% |
| 0.0004 g/mm² | 5.0% | - | - | - | - | - | - | - | - | - | - | - | - |
| | 0.0% | D | D | D | D | D | D | D | D | D | D | D | D |
| | -2.5% | D | D | D | D | D | D | D | D | D | D | D | D |
| | -5.0% | D | D | D | D | D | D | D | D | D | D | D | D |
| | -7.5% | D | D | D | D | D | D | D | D | D | D | D | D |
| | -10.0% | D | D | D | D | D | D | D | D | D | D | D | D |
| | -12.5% | D | D | D | D | D | D | D | D | D | D | D | D |
| | -15.0% | D | D | D | D | D | D | D | D | D | D | D | D |
| | -17.5% | D | D | D | D | D | D | D | D | D | D | D | D |
| | -20.0% | D | D | D | D | D | D | D | D | D | D | D | D |
| 0.0006 g/mm² | 5.0% | - | - | - | - | - | - | - | - | - | - | - | - |
| | 0.0% | D | D | D | D | D | D | D | D | D | D | D | D |
| | -2.5% | D | D | D | D | D | D | D | D | D | D | D | D |
| | -5.0% | D | D | D | D | D | D | D | D | D | D | D | D |
| | -7.5% | D | D | D | D | D | D | D | D | D | D | D | D |
| | -10.0% | D | D | D | D | D | D | D | D | D | D | D | D |
| | -12.5% | D | D | D | D | D | D | D | D | D | D | D | D |
| | -15.0% | D | D | D | D | D | D | D | D | D | D | D | D |
| | -17.5% | D | D | D | D | D | D | D | D | D | D | D | D |
| | -20.0% | D | D | D | D | D | D | D | D | D | D | D | D |
| 0.0008 g/mm² | 5.0% | - | - | - | - | - | - | - | - | - | - | - | - |
| | 0.0% | D | D | D | D | D | B | A | A | A | B | C | C |
| | -2.5% | D | D | D | D | D | B | A | A | A | A | C | C |
| | -5.0% | D | D | D | D | D | A | A | A | A | A | C | C |
| | -7.5% | D | D | D | D | D | B | A | A | A | A | C | C |
| | -10.0% | D | D | D | D | D | B | A | A | A | A | C | C |
| | -12.5% | D | D | D | D | D | B | A | A | A | B | C | C |
| | -15.0% | D | D | D | D | D | B | A | A | B | B | C | C |
| | -17.5% | D | D | D | D | D | C | C | C | C | C | C | C |
| | -20.0% | D | D | D | D | D | C | C | C | C | C | C | C |

The evaluation results demonstrated that the method for producing a lens according to the present disclosure makes it possible to produce a lens in which a round-shaped defect and a vortex-shaped defect are hardly observed and which includes a hard coat layer having excellent coatability.

It was confirmed that with the second position being situated at a position not opposite from the first position across the center of the lens base, the coatability is inferior.

It was confirmed that with the second position being situated at a position distanced from the center of the lens base by less than 15% of the radius of the lens base, a round-shaped defect is easily generated.

It was confirmed that with the discharge amount of the hard coat layer-forming composition based on a projection area of the lens base projected from the optical axis direction of the lens base being less than 0.0007 g/mm², a vortex-shaped defect is easily generated.

The results shown in Table 2 demonstrated that when the first position is situated on a line from a position distanced from the center of the lens base by 3.0% of the radius of the lens base to a position distanced from the center of the lens base by 7.0% of the radius of the lens base, a vortex-shaped defect is less likely to be generated.

The results shown in Table 2 demonstrated that when the second position is situated on a line from a position distanced from the center of the lens base by 17.0% of the radius of the lens base to a position distanced from the center of the lens base by 23.0% of the radius of the lens base, a vortex-shaped defect is less likely to be generated.

### [REFERENCE SIGNS LIST]

- 10: lens base
- 20: nozzle
- 30: plastic lens
- 32: primer layer
- 34: hard coat layer
- 36: antireflection film
- 38: water and oil repellent layer
- 40: lens
- P1: first position
- P2: second position
- O: center of lens base

## Claims

1. A method for producing a lens, the method comprising applying a hard coat layer-forming composition to a lens base by a spin coating method to form a hard coat layer,
wherein in the spin coating method, when a nozzle for discharging the hard coat layer-forming composition from a tip thereof is linearly moved from a first position to a second position via a center of the lens base and discharges the hard coat layer-forming composition while the lens base is rotated, the second position being situated opposite from the first position across the center of the lens base,
a discharge amount of the hard coat layer-forming composition based on a projection area of the lens base projected from an optical axis direction of the lens base is not less than 0.0007 g/mm²,
the first position is situated between the center of the lens base and a position distanced from the center of the lens base by 15.0% of a radius of the lens base, and
the second position is situated between a position distanced from the center of the lens base by 15.0% of the radius of the lens base and a position distanced from the center of the lens base by 25.0% of the radius of the lens base.

2. The method for producing a lens according to claim 1, wherein the first position is situated between a position distanced from the center of the lens base by 3.0% of the radius of the lens base and a position distanced from the center of the lens base by 7.0% of the radius of the lens base.

3. The method for producing a lens according to claim 1 or 2, wherein the second position is situated between a position distanced from the center of the lens base by 17.0% of the radius of the lens base and a position distanced from the center of the lens base by 23.0% of the radius of the lens base.

4. The method for producing a lens according to any one of claims 1 to 3, wherein a viscosity of the hard coat layer-forming composition at a temperature of 25°C is not lower than 10 mPa·s.
